# EUROPÄISCHE PATENTANMELDUNG

(11) **EP 4 700 424 A1**
(43) Veröffentlichungstag der Anmeldung: **25.02.2026**
(21) Anmeldenummer: 25177687.8
(22) Anmeldetag: 20.05.2025
(51) Int. Cl.: G01S 7/02, G01S 13/931

(54) **RADARSENSOR ZUM BETÄTIGEN EINES BEWEGBAREN TEILS, BEISPIELSWEISE EINER TÜR ODER KLAPPE, EINES FAHRZEUGES**

(30) Priorität: 22.08.2024 DE 102024123969
(71) Anmelder: HUF Hülsbeck & Fürst GmbH & Co. KG, 42551 Velbert (DE)
(72) Erfinder: Wehner, Dr. Philipp, 45879 Gelsenkirchen (DE); Schindler, Mirko, 42549 Velbert (DE)

(57) **Zusammenfassung**

Radarsensor (1) zum Betätigen eines bewegbaren Teils, beispielsweise einer Tür oder Klappe, eines Fahrzeuges aufweisend:
- ein Gehäuse (3) zur Aufnahme einer Elektronik, wobei die Elektronik eine Antenne und eine Sende-/Empfangseinheit umfasst,
wobei das Gehäuse (3) mindestens eine erste Befestigungsart zur unmittelbaren Befestigung an der Fahrzeugkarosserie (2) aufweist, welche mindestens einen ersten Befestigungsabschnitt (5) und mindestens einen zweiten Befestigungsabschnitt (6) aufweist, wobei der erste Befestigungsabschnitt (5) und der zweite Befestigungsabschnitt (6) geneigt zueinander angeordnet sind.

## Beschreibung

Die Erfindung betrifft einen Radarsensor zum Betätigen eines bewegbaren Teils, beispielsweise einer Tür oder Klappe, eines Fahrzeuges mit den im Oberbegriff des Anspruchs 1 angegebenen Merkmalen. Ferner bezieht sie sich auf ein Radarsensormodul mit einem solchen Radarsensor.

Aus dem Stand der Technik sind Systeme für Fahrzeuge zum Bereitstellen von unterschiedlichen Fahrzeugfunktionen, wie z. B Gestenerkennungssysteme zum Betätigen eines bewegbaren Teils, beispielsweise einer Tür oder Klappe, eines Fahrzeuges, Personenerkennung, Fahrzeugassistenzsysteme usw., grundsätzlich bekannt. Zur Betätigung einer Heckklappe beispielsweise mit einer Kick-Geste werden in der Regel ein Radarsensor mit zwei Detektionsbereichen verwendet, wobei ein Detektionsbereich wird in Fahrzeuglängsrichtung und ein anderer Detektionsbereich zum Boden ausgerichtet. Solche bekannte Anordnungen der Radarsensoren werden senkrecht ohne Neigung verbaut. Diese werden in der Regel mit einer Halterung am Stoßfänger eines Fahrzeugs befestigt. Ein Nachteil von solchen Anordnungen ist, dass die Kosten zu hoch sind. Bei Verwendung eines Radarsensors mit nur einem Detektionsbereich ist es erforderlich den Radarsensor beispielsweise 30 Grad zum Boden geneigt zu verbauen, um die Kick-Geste zu erkennen.

Der Erfindung liegt die Aufgabe zugrunde, einen einfach und kostengünstig aufgebauten, leicht montierbaren Radarsensor bereitzustellen, welcher unterschiedliche Ausrichtungen des Radarsensors zum Fahrzeug ermöglicht.

Die erfindungsgemäße Aufgabe wird mit den Merkmalen des Anspruchs 1 gelöst sowie durch ein Radarsensormodul mit den Merkmalen des Anspruchs 11. Weitere Merkmale und Details der Erfindung ergeben sich aus den Unteransprüchen, der Beschreibung und den Zeichnungen.

Gegenstand der Erfindung ist insbesondere ein Radarsensor zum Betätigen eines bewegbaren Teils, beispielsweise einer Tür oder Klappe, eines Fahrzeuges bei einem stehenden Fahrzeug. Das Fahrzeug kann dabei als ein Kraftfahrzeug und/oder Personenkraftfahrzeug und/oder Lastkraftfahrzeug und/oder zumindest teilweise autonom fahrendes Fahrzeug ausgebildet sein. Das Fahrzeug kann oder
muss sich bei der Gestenerkennung in einem stehenden Zustand befinden, also unbewegt sein. Dies hat den Vorteil, dass die Sicherheit bei Gesten im Außenbereich des Fahrzeuges, welche bspw. zum Öffnen von Türen oder Klappen dienen, gewährleistet ist. Bspw. Kann eine automatisierte Prüfung des Zustands des Fahrzeuges oder der Fahrzeuggeschwindigkeit eine Voraussetzung für die Aktivierung einer Fahrzeugfunktion bzw. Fahrzeugaktion sein. Sollte die Prüfung ergeben, dass sich das Fahrzeug nicht im Stillstand befindet, kann die Gestenerkennung ggf. blockiert werden.

Unter Gesten werden vorzugsweise einzelne Bewegungen oder Abläufe von Bewegungen verstanden, welche insbesondere gekennzeichnet sind durch ein bestimmtes Bewegungsmuster, eine bestimmte Form und/oder Ausrichtung des menschlichen Körpers oder der Gliedmaßen, einschließlich, aber nicht beschränkt auf Arten der Geste wie Hand- Armbewegungen, Bein- und Fußbewegungen, Gesichtsausdruck, Kopfbewegungen und/oder Körperhaltungen, die dazu dienen, Informationen zu vermitteln, Gefühle auszudrücken oder Absichten zu kommunizieren. Erfindungsgemäß ist vorgesehen, dass das Gehäuse mindestens eine erste Befestigungsart zur unmittelbaren Befestigung an der senkrecht ausgerichteten Fahrzeugkarosserie aufweist, welche mindestens einen ersten Befestigungsabschnitt und mindestens einen zweiten Befestigungsabschnitt aufweist, wobei der erste Befestigungsabschnitt und der zweite Befestigungsabschnitt geneigt zueinander angeordnet sind. Die erfindungsgemäße Radarsensor hat den Vorteil, dass ein einziger Radarsensor zur Erkennung einer Geste verwendet wird, da der Radarsensor an einer Fahrzeugkarosserie direkt befestigbar ist, wobei ein gewünschter Neigungswinkel in Abhängigkeit von einem Verbauort durch die unterschiedliche Befestigungsabschnitte auswählbar ist.

Hierbei wird keine Halterung benötigt, da die Befestigungsabschnitte direkt am Radarsensor-Gehäuse ausgebildet sind. Somit wird der Vorrichtungsaufwand reduziert.

Dabei kann der Verbauort des Radarsensors hinter einem Schweller oder einem Stoßfänger, insbesondere an einem vorderen und/oder hinteren Stoßfänger, an einem Frunk eines Elektrofahrzeugs, an einer A-, B- und/oder C-Säule eines Fahrzeuges sein.

Es ist bevorzugt im Rahmen der Erfindung möglich, dass am Gehäuse mindestens ein dritter Befestigungsabschnitt vorgesehen ist. Dies hat den Vorteil, dass das Gehäuse weiter universaler ausgebildet ist, so dass insgesamt drei oder mehr unterschiedliche Neigungen des Gehäuses ermöglicht werden.

Eine die Erfindung verbessernde Maßnahme sieht vor, dass am Gehäuse mindestens eine Befestigungslasche ausgebildet ist. Damit wird eine stabile und kostengünstige Befestigung erreicht, welche eine verbesserte Auflagefläche aufweist. Dabei ist die Befestigungslasche einteilig und materialeinheitlich mit dem Gehäuse ausgebildet. Besonders bevorzugt sind am Gehäuse zwei Befestigungslaschen auf gegenüberliegenden Seiten des Gehäuses angeordnet, was zur weiteren Verbesserung der Stabilität der Befestigung beiträgt. Dazu sind komplementäre Befestigungsöffnungen an der Fahrzeugkarosserie vorgesehen, so dass das Gehäuse an den Befestigungslaschen verschraubbar ist. Alternativ kann eine andere Befestigung verwendet werden. Beispielsweise kann eine Rastverbindung bzw. Clipsverbindung oder eine Bajonettverbindung zum Einsatz kommen.

Die Konstruktion ist sehr kostengünstig und einfach, wenn die Befestigungsabschnitte mindestens eine Befestigungsöffnung zur Befestigung an einer Fahrzeugkarosserie aufweisen, wobei die Befestigungsabschnitte an der Befestigungslasche ausgebildet sind.

Vorteilhafterweise können die Befestigungsöffnungen der jeweiligen Befestigungsabschnitte unterschiedlich nach PokaYoke-Prinzip zu einander positioniert sein, sodass der Radarsensor nur an einem vorbestimmten Verbauort befestigbar ist. Dabei sind die Befestigungsöffnungen auf den Befestigungslaschen in unterschiedlichen Abständen zu einander angeordnet, wobei der Radarsensor an einem vorbestimmten Verbauort der Fahrzeugkarosserie mit einem vorbestimmten Befestigungsabschnitt des Radarsensors verschraubt werden kann. Dies bringt den Vorteil mit, dass der Verbauort des Radarsensors und gewünschter Neigungswinkel bei der Befestigung am Fahrzeug nicht verwechselt werden.

Zweckmäßigerweise kann der erste Befestigungsabschnitt senkrecht oder waagerecht ausgebildet sein, wobei der zweite Befestigungsabschnitt eine Neigung im Bereich von 5 bis 45 Grad zum ersten Befestigungsabschnitt aufweist. Dabei kann wahlweise der Radarsensor am senkrechten Abschnitt befestigt werden, welcher beispielsweise im Bereich der B-Säule zur Sensierung einer Handgeste verwendet wird. Hingegen kann der zweite Befestigungsabschnitt zur Sensierung einer Handgeste am Frunk verwendet werden, was eine Neigung bevorzugt von 40 Grad erfordert.

Zweckmäßigerweise kann der erste Befestigungsabschnitt senkrecht oder waagerecht ausgebildet sein, wobei der dritte Befestigungsabschnitt eine Neigung im Bereich von 5 bis 90 Grad zum ersten Befestigungsabschnitt aufweist. Auch der Dritte Befestigungsabschnitt kann zur Sensierung einer Fußgeste im Heckbereich verwendet werden, was eine Neigung des Radarsensors zum Boden bevorzugt 30 Grad erfordert.

Ebenfalls ist denkbar, dass der zweite Befestigungsabschnitt und der dritte Befestigungsabschnitt unterschiedliche Neigungen in Bezug auf den ersten senkrechten oder waagerechten Befestigungsabschnitt aufweisen. Diese Maßnahme bringt den Vorteil mit sich, dass der Radarsensor vielfältiger und universaler in Bezug auf einen Einsatz in unterschiedlichen Verbauorten befestigt werden kann.

Es kann weiter vorgesehen sein, dass der Radarsensor eine zweite Befestigungsart zur Befestigung des Radarsensors an einem Träger aufweist. Zum weiteren universalen Einsatz des Radarsensors kann beim Radarsensor eine zweite Befestigungsart vorgesehen sein, welche zusätzlich zur ersten Befestigungsart zur direkten Befestigung des Radarsensors an der Fahrzeugkarosserie ausgebildet ist, so dass beim Radarsensor wahlweise entweder die erste Befestigungsart oder die zweite Befestigungsart zum Einsatz kommt.

Die Konstruktion ist sehr kostengünstig und einfach, wenn die zweite Befestigungsart mittels mindestens einer an dem Gehäuse ausgebildeten Rippe zur Befestigung des Radarsensors an einem Träger erfolgt, wobei der Träger zur im Wesentlichen senkrecht angeordneten Fahrzeugkarosserie, insbesondere um 5 bis 45 Grad in Richtung Boden, geneigt ist.

Ebenfalls Gegenstand der vorliegenden Erfindung ist ein Radarsensormodul, welches einen Träger zur Befestigung eines Radarsensors und einen erfindungsgemäßen Radarsensor zum Betätigen eines bewegbaren Teils, beispielsweise einer Tür oder Klappe, eines Fahrzeuges umfasst, wobei die zweite Befestigungsart, insbesondere mittels mindestens einer an dem Gehäuse ausgebildeten Rippe zur Befestigung des Radarsensors an einem Träger erfolgt, wobei der Träger zur im Wesentlichen senkrecht angeordneten Fahrzeugkarosserie, insbesondere um 30 oder 45 Grad in Richtung Boden, geneigt ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Fig. 1 eine perspektivische Schrägansicht eines Radarsensors im Sinne der Erfindung,
Fig. 2 eine Draufsicht eines Radarsensors im Sinne der Erfindung,
Fig. 3 eine Untersicht eines Radarsensors im Sinne der Erfindung,
Fig. 4 eine Seitenansicht eines Radarsensors mit Befestigung am ersten Befestigungsabschnitt gemäß einer ersten Befestigungsart,
Fig. 5 eine Seitenansicht eines Radarsensors mit Befestigung am dritten Befestigungsabschnitt gemäß einer ersten Befestigungsart,
Fig. 6 eine Seitenansicht eines Radarsensors mit Befestigung am zweiten Befestigungsabschnitt gemäß einer ersten Befestigungsart,
Fig. 7 eine perspektivischen Schrägansicht eines Radarsensors im Sinne der Erfindung gemäß einer zweiten Befestigungsart,
Fig. 8 eine Seitenansicht eines Radarsensors gemäß einer zweiten Befestigungsart

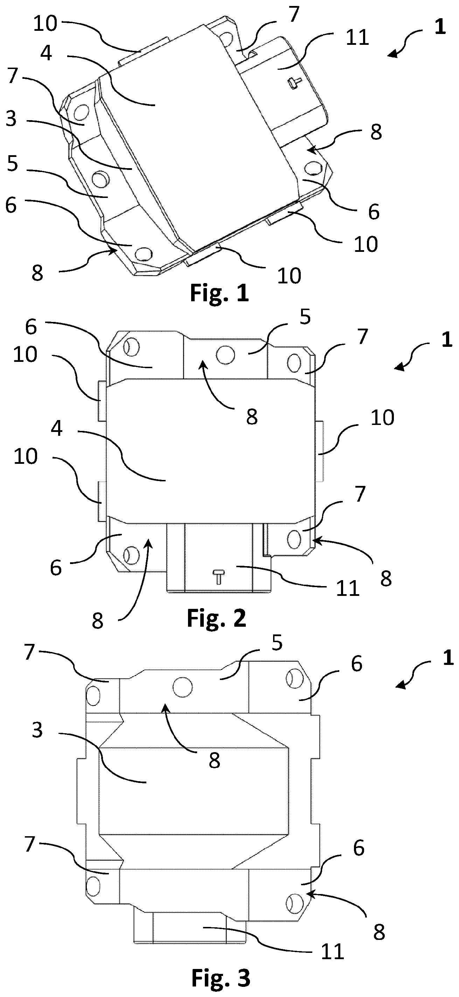

Fig. 1 zeigt eine perspektivische Schrägansicht eines Radarsensors im Sinne der Erfindung. Der Radarsensor 1 zum Betätigen eines bewegbaren Teils, beispielsweise einer Tür oder Klappe, eines Fahrzeuges weist ein Gehäuse 3 zur Aufnahme einer Elektronik auf, wobei die Elektronik mindestens eine Antenne und eine Sende-/Empfangseinheit umfasst. Ferner kann das Gehäuse 3 einen Deckel 4 aufweisen, welches mittels Ultraschallschweißen befestigt werden kann. Das Gehäuse 3 weist mindestens eine erste Befestigungsart zur unmittelbaren Befestigung an der im Wesentlichen senkrecht ausgerichteten Fahrzeugkarosserie 2 auf, welche mindestens einen ersten Befestigungsabschnitt 5 und mindestens einen zweiten Befestigungsabschnitt 6 aufweist, wobei der erste Befestigungsabschnitt 5 und der zweite Befestigungsabschnitt 6 geneigt zueinander angeordnet sind.

Ferner ist am Gehäuse 3 mindestens ein dritter Befestigungsabschnitt 7 vorgesehen. Am Gehäuse 3 ist mindestens eine Befestigungslasche 8 ausgebildet. Bevorzugt sind zwei Befestigungslaschen 8 zur stabilen Befestigung des Radarsensors 1 vorgesehen, welche gegenüberliegend am Gehäuse 3 ausgebildet sind. Zusätzlich zu der ersten Befestigungsart ist eine zweite Befestigungsart vorgesehen. Dazu weist das Gehäuse mindestens eine Rippe 10, bevorzugt drei Rippen 10, zur Befestigung an einem Träger 9 auf.

Die Befestigungsabschnitte weisen mindestens eine Befestigungsöffnung zur Befestigung an einer Fahrzeugkarosserie 2 auf, wobei die Befestigungsabschnitte an der Befestigungslasche 8 ausgebildet sind. In der Fahrzeugkarosserie 2 sind komplementäre Befestigungsöffnungen zur Verschraubung des Radarsensors 1 ausgebildet. Alternativ kann der Radarsensor 1 an den jeweiligen Befestigungsabschnitten mittels Clipsverbindung an der Fahrzeugkarosserie 2 befestigt werden. Weiter weist das Gehäuse 3 einen Stecker 11 zur Verbindung des Radarsensors 1 mit einem Fahrzeugsteuergerät auf, wie in Fig. 2 und 3 gut zu erkennen ist.

Wie in Fig. 1, 2, 3 gut zu erkennen ist, sind die Befestigungsöffnungen der jeweiligen Befestigungsabschnitte unterschiedlich zu einander nach PokaYoke-Prinzip positioniert, sodass der Radarsensor nur an einem vorbestimmten Verbauort befestigbar ist.

Der erste Befestigungsabschnitt 5 ist senkrecht oder waagerecht ausgebildet, wobei der zweite Befestigungsabschnitt 6 eine Neigung im Bereich von 5 bis 45 Grad aufweist.

Der erste Befestigungsabschnitt 5 ist senkrecht oder waagerecht ausgebildet, wobei der dritte Befestigungsabschnitt 7 eine Neigung im Bereich von 5 bis 90 Grad aufweist. Der zweite Befestigungsabschnitt 6 und der dritte Befestigungsabschnitt 7 weisen unterschiedliche Neigungen in Bezug auf den ersten senkrechten oder waagerechten Befestigungsabschnitt 5 auf.

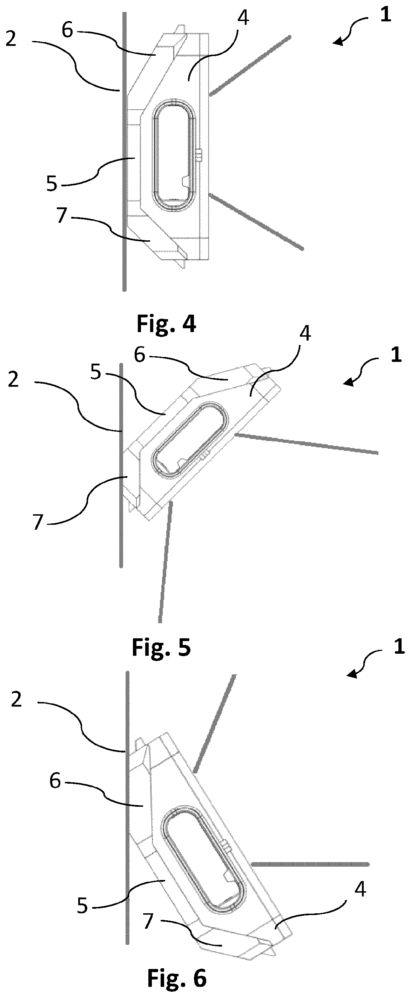

In Fig. 4, 5 und 6 wird ein Radarsensor 1 gezeigt, welcher an den jeweiligen Befestigungsabschnitten 5, 6, 7 an einer Fahrzeugkarosserie 2 befestigt ist.

In Fig. 4 ist der Radarsensor am ersten Befestigungsabschnitt 5 befestigt. Am Gehäuse 4 ist ein Detektionsbereich des Radarsensor 1 mit zwei Linien angedeutet. Dabei ist die Fahrzeugkarosserie 2 senkrecht ausgebildet. Im diesem Fall erstreckt sich der Detektionsbereich im Wesentlichen horizontal.

In Fig. 5 ist der Radarsensor am dritten Befestigungsabschnitt 7 befestigt. Am Gehäuse 4 ist ein Detektionsbereich des Radarsensor 1 mit zwei Linien angedeutet. Dabei ist die Fahrzeugkarosserie 2 senkrecht ausgebildet. Im diesem Fall ist der Detektionsbereich nach unten zum Boden gerichtet.

In Fig. 6 ist der Radarsensor am zweiten Befestigungsabschnitt 6 befestigt. Am Gehäuse 4 ist ein Detektionsbereich des Radarsensor 1 mit zwei Linien angedeutet. Dabei ist die Fahrzeugkarosserie 2 senkrecht ausgebildet. In diesem Fall ist der Detektionsbereich schräg nach oben in Bezug auf den Boden gerichtet.

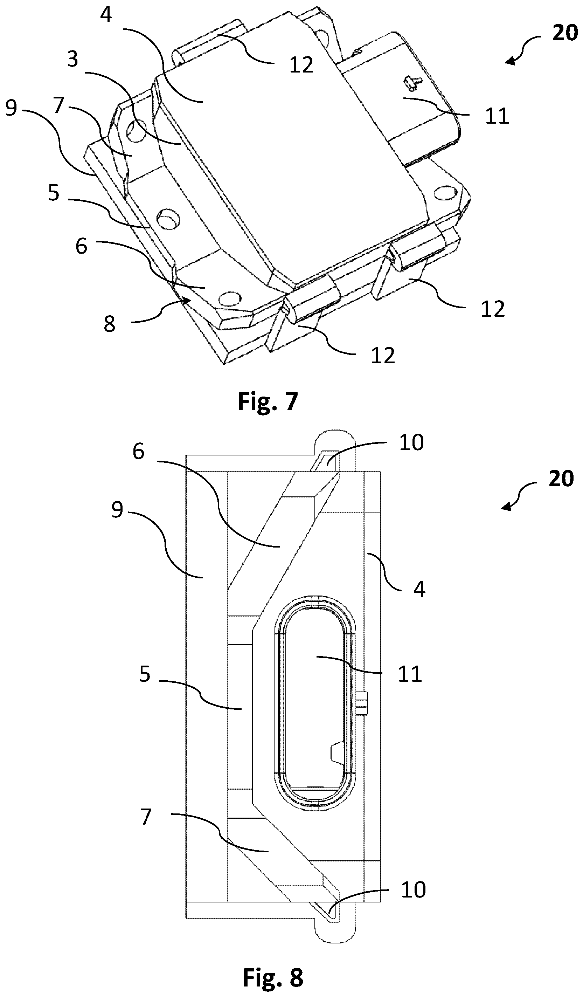

In Fig. 7, 8 zeigt die zweite Befestigungsart des Radarsensors, welche mittels mindestens einer an dem Gehäuse 3 ausgebildeten Rippe 10 zur Befestigung des Radarsensors 1 an einem Träger 9 erfolgt, wobei der Träger 9 zur senkrecht angeordneten Fahrzeugkarosserie 2, insbesondere um 5 bis 45 Grad in Richtung Boden, geneigt ist. Dabei umfasst ein Radarsensormodul einen Träger 9 zur Befestigung eines Radarsensors 1 und den erfindungsgemäßen Radarsensor 1 zum Betätigen eines bewegbaren Teils, beispielsweise einer Tür oder Klappe, eines Fahrzeuges, wobei die zweite Befestigungsart, insbesondere mittels mindestens einer an dem Gehäuse 3 ausgebildeten Rippe 10 zur Befestigung des Radarsensors 1 an einem Träger 9 erfolgt, wobei der Träger 9 zur senkrecht angeordneten Fahrzeugkarosserie 2, insbesondere um 30 oder 45 Grad in Richtung Boden, geneigt ist.

Der Träger 9 weist mindestens einen Befestigungsarm 12 auf, bevorzugt drei Befestigungsarme 12. Dabei wirken die Rippen 10 mit den Befestigungsarmen 12 zusammen. Die Befestigung kann durch ein seitliches Einschieben des Radarsensors 1 in den Träger 9 oder von vorne durch elastisches Nachgeben der Befestigungsarme 12 erfolgen, so dass der Radarsensors 1 im Träger 9 einrastet und durch die Rippen 10 gehalten wird.

Die vorstehend beschriebene Erfindung ist selbstverständlich nicht auf die beschriebenen und dargestellten Ausführungsformen beschränkt. Es ist ersichtlich, dass an den in der Figur dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

### Bezugszeichenliste

- 1: Radarsensor
- 2: Fahrzeugkarosserie
- 3: Gehäuse
- 4: Deckel
- 5: erster Befestigungsabschnitt
- 6: zweiter Befestigungsabschnitt
- 7: dritter Befestigungsabschnitt
- 8: Befestigungslasche
- 9: Träger
- 10: Rippe
- 11: Stecker
- 12: Befestigungsarm

- 20: Radarsensormodul

## Patentansprüche

1. Radarsensor (1) zum Betätigen eines bewegbaren Teils, beispielsweise einer Tür oder Klappe, eines Fahrzeuges aufweisend:
- ein Gehäuse (3) zur Aufnahme einer Elektronik, wobei die Elektronik eine Antenne und eine Sende-/Empfangseinheit umfasst,
**dadurch gekennzeichnet, dass** das Gehäuse (3) mindestens eine erste Befestigungsart zur unmittelbaren Befestigung an der Fahrzeugkarosserie (2) aufweist, welche mindestens einen ersten Befestigungsabschnitt (5) und mindestens einen zweiten Befestigungsabschnitt (6) aufweist, wobei der erste Befestigungsabschnitt (5) und der zweite Befestigungsabschnitt (6) geneigt zueinander angeordnet sind.

2. Radarsensor (1) nach Anspruch 1, **dadurch gekennzeichnet, dass** am Gehäuse (3) mindestens ein dritter Befestigungsabschnitt (7) vorgesehen ist.

3. Radarsensor (1) nach Anspruch 1 oder 2, **dadurch gekennzeichnet, dass** am Gehäuse (3) mindestens eine Befestigungslasche (8) ausgebildet ist.

4. Radarsensor (1) nach einem der vorhergehenden Ansprüche, **dadurch gekennzeichnet, dass** die Befestigungsabschnitte (5, 6, 7) mindestens eine Befestigungsöffnung zur Befestigung an einer Fahrzeugkarosserie aufweisen, wobei die Befestigungsabschnitte (5, 6, 7) an der Befestigungslasche (8) ausgebildet sind.

5. Radarsensor (1) nach einem der vorhergehenden Ansprüche, **dadurch gekennzeichnet, dass** die Befestigungsöffnungen der jeweiligen Befestigungsabschnitte (5, 6, 7) unterschiedlich nach PokaYoke-Prinzip zu einander positioniert sind, sodass der Radarsensor nur an einem vorbestimmten Verbauort befestigbar ist.

6. Radarsensor (1) nach einem der vorhergehenden Ansprüche, **dadurch gekennzeichnet, dass** der erste Befestigungsabschnitt (5) bevorzugt senkrecht oder waagerecht ausgebildet ist, wobei der zweite Befestigungsabschnitt (6) eine Neigung im Bereich von 5 bis 45 Grad zum ersten Befestigungsabschnitt (5) aufweist.

7. Radarsensor (1) nach einem der vorhergehenden Ansprüche, **dadurch gekennzeichnet, dass** die erste Befestigungsabschnitt (5) bevorzugt senkrecht oder waagerecht ausgebildet ist, wobei der dritte Befestigungsabschnitt (7) eine Neigung im Bereich von 5 bis 90 Grad zum ersten Befestigungsabschnitt (5) aufweist.

8. Radarsensor (1) nach einem der vorhergehenden Ansprüche, **dadurch gekennzeichnet, dass** der zweite Befestigungsabschnitt (6) und der dritte Befestigungsabschnitt (7) unterschiedliche Neigungen in Bezug auf den ersten bevorzugt senkrechten oder waagerechten Befestigungsabschnitt (5) aufweisen.

9. Radarsensor (1) nach Anspruch 1, **dadurch gekennzeichnet, dass** eine zweite Befestigungsart zur Befestigung des Radarsensors (1) an einem Träger (9) vorgesehen ist.

10. Radarsensor (1) nach Anspruch 1, **dadurch gekennzeichnet, dass** die zweite Befestigungsart mittels mindestens einer an dem Gehäuse (3) ausgebildeten Rippe (10) zur Befestigung des Radarsensors (1) an einem Träger (9) erfolgt, wobei der Träger (9) zur im Wesentlichen senkrecht angeordneten Fahrzeugkarosserie (2), insbesondere um 5 bis 45 Grad in Richtung Boden, geneigt ist.

11. Radarsensormodul aufweisend:
- einen Träger (9) zur Befestigung eines Radarsensors (1),
- einen Radarsensor (1) nach Anspruch 1 zum Betätigen eines bewegbaren Teils, beispielsweise einer Tür oder Klappe, eines Fahrzeuges, wobei die zweite Befestigungsart, insbesondere mittels mindestens einer an dem Gehäuse (3) ausgebildeten Rippe (10) zur Befestigung des Radarsensors (1) an einem Träger (9) erfolgt, wobei der Träger (9) zur im Wesentlichen senkrecht angeordneten Fahrzeugkarosserie (2), insbesondere um 30 oder 45 Grad in Richtung Boden, geneigt ist.
